# EUROPÄISCHE PATENTANMELDUNG

(11) **EP 1 387 186 A1**
(43) Veröffentlichungstag der Anmeldung: **04.02.2004**
(21) Anmeldenummer: 03017210.0
(22) Anmeldetag: 29.07.2003
(51) Int. Cl.: G01V 8/10, G01D 11/24

(54) **Optoelektronisches Gerät zur optischen Erfassung eines Objekts**

(30) Priorität: 29.07.2002 DE 10234466
(71) Anmelder: SIEMENS AKTIENGESELLSCHAFT, 80333 München (DE)
(72) Erfinder: Zima, Josef, 54931 Hronov (CZ)

(57) **Zusammenfassung**

Ein optoelektronisches Gerät zur optischen Erfassung eines Objekts (16) weist hierfür erforderliche elektronische, optoelektronische und optische Komponenten (3 bis 5, 12, 13) auf. Die Komponenten (3 bis 5, 12, 13) sind ausschließlich auf einer optoelektronischen Modulgruppe angeordnet. Sie sind über einen Anschluss (18) für eine elektrische Verbindung betreibbar, der auf einem Anschlussmodul (17) angeordnet ist. Die Modulgruppe und das Anschlussmodul (17) sind in korrespondierende Aufnahmen (22, 23) des Basisgehäuses (21) eingeführt, so dass die Komponenten (3 bis 5, 12, 13) im Basisgehäuse (21) angeordnet sind und der Anschluss (18) von außerhalb des optoelektronischen Geräts zugänglich bleibt.

## Beschreibung

Die vorliegende Erfindung betrifft ein optoelektronisches Gerät zur optischen Erfassung eines Objekts, mit für die optische Erfassung des Objekts erforderlichen elektronischen, optoelektronischen und optischen Komponenten, die in einem Basisgehäuse angeordnet sind und über einen von außerhalb des optoelektronischen Geräts zugänglichen Anschluss für eine elektrische Verbindung betreibbar sind.

Derartige optoelektronische Geräte sind allgemein bekannt. Sie finden insbesondere in Form von optischen Näherungsschaltern (z. B. den sogenannten BEROs der Firma Siemens) Verwendung. Auch in der DE 100 15 511 A1 und der DE 35 13 475 A1 sind solche optoelektronischen Geräte beschrieben.

Aus der DE 44 34 011 C1 und der US-PS-4,412,129 sind optoelektronische Geräte bekannt, bei denen die Anschlüsse in einem separaten Anschlussmodul angeordnet sind, so dass die Anschlusstechnik leicht modifiziert werden kann.

Aus dem DE-GM-296 20 422 ist ein optoelektronisches Gerät bekannt, bei dem in dem optoelektronischen Gerät mindestens ein Meldeelement zur optischen Anzeige eines Betriebszustands des optoelektronischen Geräts angeordnet ist. Von dem Meldeelement abgegebenes Licht wird durch eine lichtdurchlässige Abdeckscheibe nach außerhalb des optoelektronischen Geräts durchgelassen.

Die bekannten optoelektronischen Geräte bestehen in der Regel aus zwei Gehäuseteilen, in welche die optischen, die optoelektronischen und die elektronischen Komponenten sowie gegebenenfalls auch mechanische Komponenten eingebaut werden. An den Einbau der optischen und optoelektronischen Elemente werden hohe Anforderungen an die maßliche Genauigkeit gestellt, damit die optischen Achsen bzw. der Winkel zwischen mehreren optischen Achsen und die Fokussierung ordnungsgemäß sind. Dies ist bei den bekannten Geräten schwierig und umständlich. In der Folge sind die Gehäuse kompliziert konstruiert, was zu teueren Werkzeugen und teueren Teilen führt. Ferner erhöht sich das Risiko, in der Fertigung Ausschuss zu produzieren.

Ein weiteres Problem besteht darin, dass die Geräte des Standes der Technik erst nach Einbau aller Komponenten auf Funktion und Eigenschaften geprüft werden können. Viele Elemente sind nach der Montage jedoch nicht mehr erreichbar. Dies gestaltet einen Abgleich, ein Justieren und auch eine eventuelle Reparatur sehr schwierig. Zum Einstellen der Geräte werden ferner von außen justierbare Elemente benötigt, was wiederum komplizierte, teure Lösungen bewirkt. Auch führen derartige, von außen zugängliche Justageelemente zu Problemen mit der erforderlichen Schutzart.

Darüber hinaus bieten die Geräte nur eine beschränkte Variationsmöglichkeit für verschiedene kundenspezifische Ausführungen. Dies gilt insbesondere für die Anschlusstechniken. In diesem Fall benötigt man entweder neue Gehäuseteile oder geeignete Adapter. Letztere sind nicht nur teuer, sondern benötigen darüber hinaus viel Platz.

Die Aufgabe der vorliegenden Erfindung besteht darin, ein gattungsgemäßes optoelektronisches Gerät derart weiter zu entwickeln, dass die oben stehend beschriebenen Probleme vermieden werden, wobei zusätzlich ein Betriebszustand des Geräts auf einfache Weise von außen erkennbar sein soll.

Die Aufgabe wird dadurch gelöst, dass die Komponenten ausschließlich auf einer optoelektronischen Modulgruppe angeordnet sind, dass der Anschluss auf einem Anschlussmodul angeordnet ist, dass die optoelektronische Modulgruppe und das Anschlussmodul in korrespondierende Aufnahmen des Basisgehäuses eingeführt sind, dass auf der optoelektronischen Modulgruppe mindestens ein Meldeelement zur optischen Anzeige eines Betriebszustands der optoelektronischen Modulgruppe angeordnet ist und dass in eine weitere Aufnahme des Basisgehäuses ein Lichtleitermodul eingeführt ist, mittels dessen von dem Meldeelement abgegebenes Licht noch außerhalb des optoelektronischen Geräts führbar ist.

Denn dadurch ist bereits die optoelektronische Modulgruppe voll funktionsfähig. Insbesondere ist es daher möglich, die optischen und elektrischen Eigenschaften des Geräts bereits vor dem Einbau der optoelektronischen Modulgruppe in das Basisgehäuse zu überprüfen, gegebenenfalls einzustellen bzw. zu justieren oder sogar zu reparieren. Gleichzeitig ist es durch Verwendung eines geeigneten Anschlussmoduls möglich, die Anschlusstechnik leicht und ohne weiteres anzupassen. Ferner ist auch im Betrieb der Betriebszustand ohne weiteres erkennbar.

Wenn die optoelektronische Modulgruppe ein Optomodul und ein mit dem Optomodul verbundenes Elektronikmodul aufweist, die optischen Komponenten auf dem Optomodul angeordnet sind und die elektronischen und optoelektronischen Komponenten auf dem Elektronikmodul angeordnet sind, ergibt sich ein konstruktiv einfacherer Aufbau. Insbesondere sind in diesem Fall die optischen Eigenschaften einerseits und die elektronischen und optoelektronischen Eigenschaften andererseits unabhängig voneinander überprüfbar und/oder voreinstellbar.

Wenn das Elektronikmodul mit dem Optomodul toleranzarm fest verbunden ist, z. B. verschweißt ist, ergibt sich eine besonders stabile und zuverlässige Verbindung zwischen dem Elektronikmodul und dem Optomodul.

Wenn das Elektronikmodul einen Optokomponententräger für zumindest die optoelektronischen Komponenten und einen mit dem Optokomponententräger verbundenen Elektronikkomponententräger für die - gegebenenfalls verbleibenden - elektronischen Komponenten aufweist und zumindest der Optokomponententräger direkt mit dem Optomodul verbunden ist, ergibt sich ein noch zuverlässigerer, insbesondere gut justierbarer Aufbau. Dies gilt ganz besonders, wenn die Komponententräger flexibel miteinander verbunden sind.

Wenn das Anschlussmodul als Spritzgießteil ausgebildet ist, ist es besonders kostengünstig und einfach herstellbar.

Wenn die optischen Komponenten eine Abdeckplatte umfassen und die Abdeckplatte die einzige optische Komponente ist, die von außerhalb des optoelektronischen Gerätes zugänglich ist, sind die anderen optischen Komponenten auf einfache Weise geschützt.

Wenn die Abdeckplatte derart dimensioniert ist, dass sie in die Aufnahme für das Lichtleitermodul einsetzbar ist, sind durch diese Abmessungsvereinheitlichung die Kosten für das optoelektronische Gerät weiter reduzierbar.

Wenn die optoelektronische Modulgruppe und das Anschlussmodul, gegebenenfalls auch das Lichtleitermodul, in das Basisgehäuse eingeschnappt oder mit dem Basisgehäuse verklebt oder verschweißt sind, ergibt sich ein besonders stabiler und zuverlässiger Halt der Module bzw. der Modulgruppe im Basisgehäuse.

Wenn die Aufnahmen des Basisgehäuses für die optoelektronische Modulgruppe und das Anschlussmodul derart ausgebildet sind, dass die optoelektronische Modulgruppe in die Aufnahme für das Anschlussmodul und das Anschlussmodul in die Aufnahme für die Modulgruppe einführbar sind, ist das optoelektronische Gerät noch flexibler einsetzbar.

In der Regel ist das Basisgehäuse im wesentlichen quaderförmig ausgebildet. Es kapselt in der Regel die elektronischen und die optoelektronischen Komponenten, gegebenenfalls auch die optischen Komponenten, in hoher Schutzart, z. B. gemäß IP 54 oder besser.

Weitere Vorteile und Einzelheiten ergeben sich aus der nachfolgenden Beschreibung eines Ausführungsbeispiels. Dabei zeigen in Prinzipdarstellung
- FIG 1: ein Optomodul,
- FIG 2: ein Elektronikmodul,
- FIG 3: eine optoelektronische Modulgruppe,
- FIG 4: ein Anschlussmodul,
- FIG 5: ein Basisgehäuse und ein Lichtleitermodul,
- FIG 6: ein optoelektronisches Gerät und
- FIG 7: eine Variante von FIG 6.

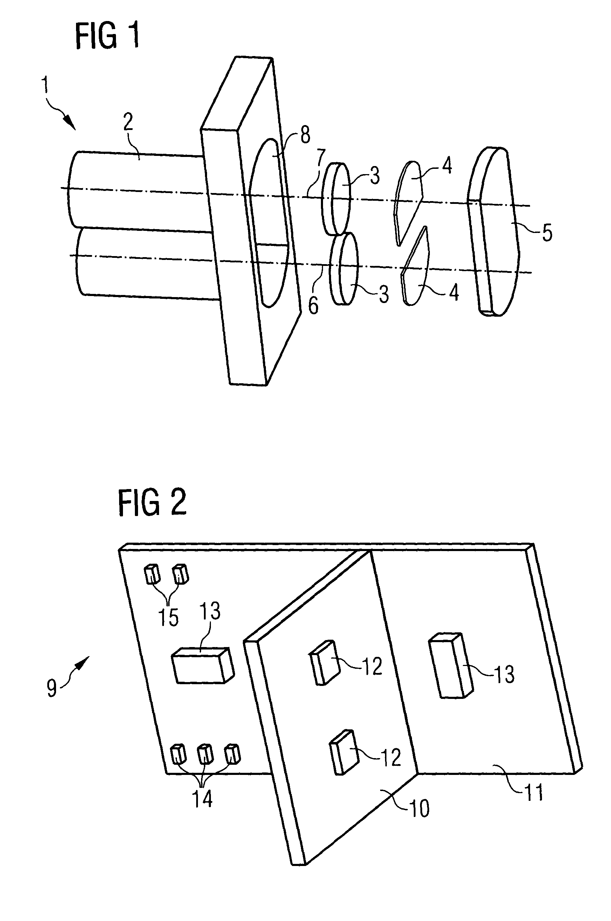

Gemäß FIG 1 weist ein Optomodul 1 einen Grundkörper 2 auf. Im Grundkörper 2 sind verschiedene optische Komponenten 3 bis 5 angeordnet. Die optischen Komponenten 3 bis 5 umfassen insbesondere Linsen 3, Polarisationsfilter 4 sowie eine Abdeckplatte 5. Die optischen Komponenten 3 bis 5 sind in den Grundkörper 2 eingesetzt. Dieser nimmt die optischen Komponenten 3 bis 5 hochgenau auf. Er legt somit insbesondere mit hinreichender Genauigkeit optische Achsen 6, 7 und - der Übersichtlichkeit halber nicht mit eingezeichnete - Fokussierebenen fest.

Die Abdeckplatte 5 ist insbesondere in eine entsprechende Aufnahme 8 des Grundkörpers 2 eingesetzt. Sie schützt daher die anderen optischen Komponenten 3, 4.

Gemäß FIG 2 weist ein Elektronikmodul 9 einen Optokomponententräger 10 und einen Elektronikkomponententräger 11 auf. Die Komponententräger 10, 11 sind in der Regel als Leiterplatten 10, 11 ausgebildet.

Auf dem Optokomponententräger 10 sind optoelektronische Komponenten 12 angeordnet. Die optoelektronischen Komponenten 12 umfassen insbesondere einen optischen Sender und einen optischen Empfänger. Auf dem Optokomponententräger 10 können ferner elektronische Komponenten angeordnet sein. Dies ist aber nicht zwingend erforderlich.

Der Optokomponententräger 10 ist - starr oder flexibel - mit dem Elektronikkomponententräger 11 verbunden. Auf dem Elektronikkomponententräger 11 sind elektronische Komponenten 13 angeordnet. Die elektronischen Komponenten 13 bilden eine Beschaltung für die optoelektronischen Komponenten 12. Der Elektronikkomponententräger 11 weist ferner Anschlusskontakte 14 sowie Meldeelemente 15 auf. Die Meldeelemente 15 sind in der Regel als Leuchtdioden 15 ausgebildet. Über sie ist insbesondere ein Betriebszustand des Elektronikmoduls 9 anzeigbar.

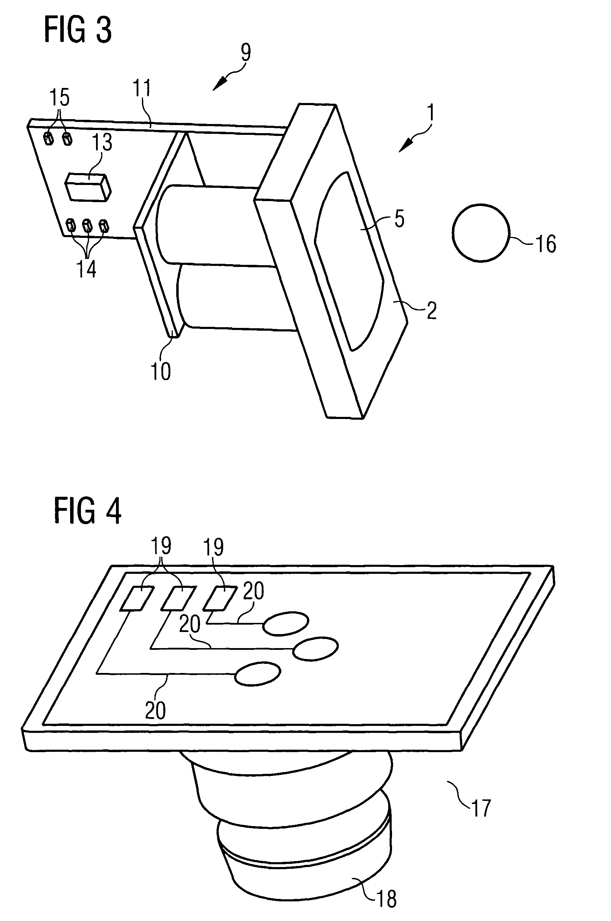

Gemäß FIG 3 ist der Optokomponententräger 10 direkt mit dem Optomodul 1 verbunden, z. B. durch Ultraschallverschweißung. Dadurch ist der Optokomponententräger 10 besonders toleranzarm und stabil mit dem Optomodul 1 verbunden. Insbesondere ist dadurch gewährleistet, dass die optoelektronischen Komponenten 12 korrekt in den Fokussierebenen angeordnet sind.

Auch der Elektronikkomponententräger 11 ist mit dem Optomodul 1 verbunden. Hier muss die Verbindung aber nicht so toleranzgenau und stabil sein. Beispielsweise ist ein Einführen des Elektronikkomponententrägers 11 in Führungsschienen mit anschließendem Verrasten denkbar.

Das Elektronikmodul 9 und das Optomodul 1 bilden zusammen eine optoelektronische Modulgruppe. Bereits mit den optischen, optoelektronischen und elektronischen Komponenten 3 bis 5, 12, 13 ist eine optische Erfassung eines Objekts 16 möglich. Die hierzu erforderlichen Komponenten 3 bis 5, 12, 13 sind also ausschließlich auf der optoelektronischen Modulgruppe angeordnet. Die optoelektronische Modulgruppe ist also bereits voll funktionsfähig. Sie ist somit für sich auf Funktionsfähigkeit prüfbar. Ferner ist sie, soweit erforderlich, justierbar und gegebenenfalls auch reparierbar. Die Prüfbarkeit, Justierbarkeit und Reparierbarkeit betrifft dabei sowohl die optischen als auch die elektrischen und elektronischen Parameter und Charakteristiken der optoelektronischen Modulgruppe. Ferner ist es möglich, durch Verwendung einer entsprechend ausgebildeten optoelektronischen Modulgruppe ohne Änderungen an anderen Elementen spezielle Anforderungen oder Kundenwünsche zu berücksichtigen.

Gemäß FIG 4 ist auf einem Anschlussmodul 17 ein Anschluss 18 für eine elektrische Verbindung angeordnet. Der Anschluss 18 kann beispielsweise als hohles Außengewinde mit im Hohlraum angeordneten Kontaktstiften ausgebildet sein. Auch andere Anschlusstechniken sind aber möglich.

Das Anschlussmodul 17 ist als Spritzgießteil ausgebildet. Es weist eine Unterseite auf, auf der z. B. Kontaktflächen 19 angeordnet sind, die mit den oben stehend erwähnten Kontaktstiften über Leiterbahnen 20 verbunden sind und der Kontaktierung der Anschlusskontakte 14 dienen. Über den Anschluss 18 ist somit eine elektrische Verbindung zu den elektronischen und optoelektronischen Komponenten 12, 13 des Elektronikmoduls 9 herstellbar, so dass diese betreibbar sind.

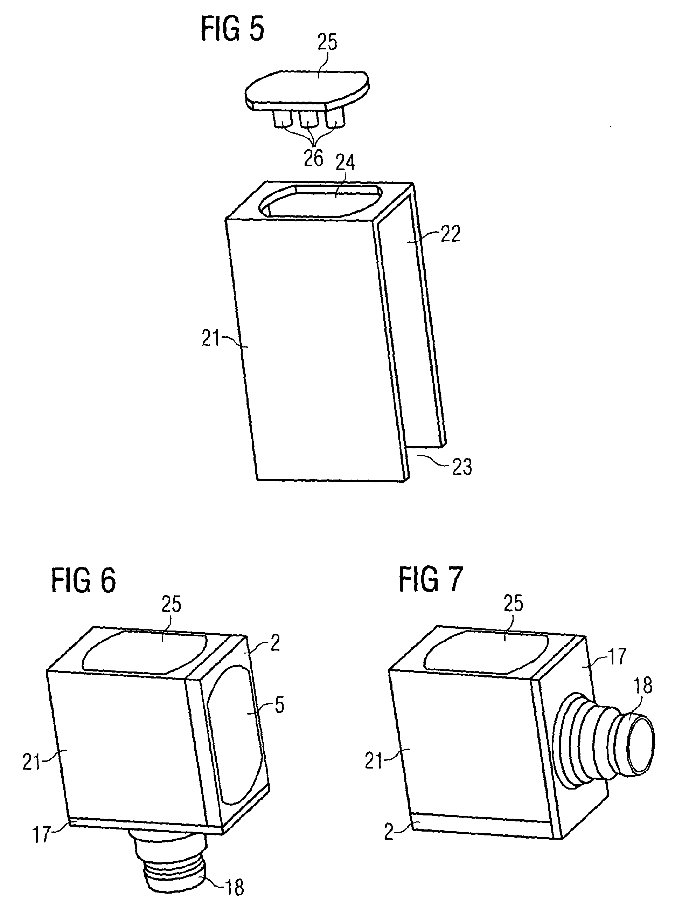

Gemäß FIG 5 ist ein Basisgehäuse 21 im wesentlichen quaderförmig ausgebildet. Es weist Aufnahmen 22 bis 24 auf. In die Aufnahme 22 ist die optoelektronische Modulgruppe einführbar. In die Aufnahme 23 ist das Anschlussmodul 17 einführbar. In die Aufnahme 24 ist ein Lichtleitermodul 25 einführbar. Mittels Lichtleitern 26 des Lichtleitermoduls 25 wird das von den Meldeelementen 15 abgegebene Licht nach außen geführt. Somit sind die Anzeigen der Meldeelemente 15 von außerhalb des optoelektronischen Geräts erkennbar. Die optoelektronische Modulgruppe, das Anschlussmodul 17 und das Lichtleitermodul 25 sind beispielsweise durch Einschnappen, Verkleben oder Verschweißen im Basisgehäuse 21 fixierbar.

Die Lichtleiter 26 sind gemäß FIG 5 starr und schließen plan mit dem Lichtleitermodul 25 ab. Sie könnten aber auch flexibel sein und über das Lichtleitermodul 25 hinausgehen. Insbesondere in diesem Fall ist es möglich, die Anzeigen der Meldeelemente 15 auch dann von außen abzulesen, wenn das Lichtleitermodul 25 selbst nicht einsehbar sein sollte.

FIG 6 zeigt das Basisgehäuse 21 mit eingeführter optoelektronischer Modulgruppe, eingeführtem Anschlussmodul 17 und eingeführtem Lichtleitermodul 25. In diesem, dem zusammengebauten Zustand des so gebildeten optoelektronischen Geräts zur optischen Erfassung des Objekts 16 ist das Innere des Geräts nicht mehr zugänglich. Vielmehr kapselt das Basisgehäuse 21 in diesem Zustand die elektronischen und optoelektronischen Komponenten 12, 13 sowie - mit Ausnahme der Abdeckplatte 5 - auch die optischen Komponente 3 bis 5 in hoher Schutzart. Die Abdeckplatte 5 ist also die einzige optische Komponente 5, die von außerhalb des optoelektronischen Geräts zugänglich ist. Die Linsen 3 und die Polarisationsfilter 4 hingegen sind mit gekapselt. Die Kapselung genügt dabei mindestens der Schutzklasse IP 54, besser der Schutzklasse IP 65 oder sogar IP 67.

Im zusammengebauten Zustand des optoelektronischen Geräts sind somit die für die optische Erfassung des Objekts 16 erforderlichen elektronischen, optoelektronischen und optischen Komponenten 3 bis 5, 12, 13 im Basisgehäuse 21 angeordnet. Der Anschluss 18 hingegen ist weiterhin von außerhalb des optoelektronischen Geräts zugänglich.

Die Abdeckplatte 5 und das Lichtleitermodul 25 weisen gemäß FIG 6 die gleichen Abmessungen auf. Die Abdeckplatte 5 ist somit in die Aufnahme 24 für das Lichtleitermodul 25 einsetzbar. Ferner sind die Aufnahmen 22 und 23 für die optoelektronische Modulgruppe und das Anschlussmodul 17 gleich ausgebildet. Dadurch ist es insbesondere möglich, wie in FIG 7 schematisch dargestellt, die optoelektronische Modulgruppe in die Aufnahme 23 für das Anschlussmodul 17 und das Anschlussmodul 17 in die Aufnahme 22 für die optoelektronische Modulgruppe einzuführen.

Mittels des erfindungsgemäßen optoelektronischen Geräts sind auf einfache Weise folgende Vorteile erzielbar:
- Das Optomodul 1, das Elektronikmodul 9 einschließlich seiner Komponententräger 10, 11, das Anschlussmodul 17 und das Lichtleitermodul 25 sind speziell für die an das jeweilige Modul 1, 9, 17, 25 zu stellenden Anforderungen optimierbar.
- Die Module 1, 9, 17, 25 sind vorab einzeln prüfbar, justierbar und erforderlichenfalls auch reparierbar. Ausschuss an Fertiggeräten tritt nicht mehr auf.
- Kundenwünsche und andere Spezialanforderungen sind auf einfachere und kostengünstigere Weise als im Stand der Technik realisierbar. Beispielsweise kann das Anschlussmodul 17 ohne Anpassung der anderen Module 1, 9, 25 ohne weiteres für eine andere Anschlusstechnik ausgestaltet werden.

## Patentansprüche

1. Optoelektronisches Gerät zur optischen Erfassung eines Objekts (16), mit für die optische Erfassung des Objekts (16) erforderlichen elektronischen, optoelektronischen und optischen Komponenten (3 bis 5, 12, 13), die in einem Basisgehäuse (21) angeordnet sind und über einen von außerhalb des optoelektronischen Geräts zugänglichen Anschluss (18) für eine elektrische Verbindung betreibbar sind, wobei die Komponenten (3 bis 5, 12, 13) ausschließlich auf einer optoelektronischen Modulgruppe angeordnet sind, wobei der Anschluss (18) auf einem Anschlussmodul (17) angeordnet ist, wobei die optoelektronische Modulgruppe und das Anschlussmodul (17) in korrespondierende Aufnahmen (22, 23) des Basisgehäuses (21) eingeführt sind, wobei auf der optoelektronischen Modulgruppe mindestens ein Meldeelement (15) zur optischen Anzeige eines Betriebszustands der optoelektronischen Modulgruppe angeordnet ist und wobei in eine weitere Aufnahme (24) des Basisgehäuses (21) ein Lichtleitermodul (25) eingeführt ist, mittels dessen von dem Meldeelement (15) abgegebenes Licht nach außerhalb des optoelektronischen Geräts führbar ist.

2. Gerät nach Anspruch 1,
**dadurch gekennzeichnet,**
**dass** die optoelektronische Modulgruppe ein Optomodul (1) und ein mit dem Optomodul (1) verbundenes Elektronikmodul (9) aufweist, dass die optischen Komponenten (3 bis 5) auf dem Optomodul (1) angeordnet sind und dass die elektronischen und optoelektronischen Komponenten (12, 13) auf dem Elektronikmodul (9) angeordnet sind.

3. Gerät nach Anspruch 2,
**dadurch gekennzeichnet,**
**dass** das Elektronikmodul (9) mit dem Optomodul (1) toleranzarm fest verbunden ist, z. B. verschweißt ist.

4. Gerät nach Anspruch 2 oder 3,
**dadurch gekennzeichnet,**
**dass** das Elektronikmodul (9) einen Optokomponententräger (10) für zumindest die optoelektronischen Komponenten (12) und einen mit dem Optokomponententräger (10) verbundenen Elektronikkomponententräger (11) für die - gegebenenfalls verbleibenden - elektronischen Komponenten (13) aufweist und dass zumindest der Optokomponententräger (10) direkt mit dem Optomodul (1) verbunden ist.

5. Gerät nach Anspruch 4,
**dadurch gekennzeichnet,**
**dass** die Komponententräger (10, 11) flexibel miteinander verbunden sind.

6. Gerät nach einem der obigen Ansprüche,
**dadurch gekennzeichnet,**
**dass** das Anschlussmodul (17) als Spritzgießteil (17) ausgebildet ist.

7. Gerät nach einem der obigen Ansprüche,
**dadurch gekennzeichnet,**
**dass** die optischen Komponenten (3 bis 5) eine Abdeckplatte (5) umfassen und dass die Abdeckplatte (5) die einzige optische Komponente (5) ist, die von außerhalb des optoelektronischen Geräts zugänglich ist.

8. Gerät nach Anspruch 7,
**dadurch gekennzeichnet,**
**dass** die Abdeckplatte (5) derart dimensioniert ist, dass sie in die Aufnahme (24) für das Lichtleitermodul (25) einsetzbar ist.

9. Gerät nach einem der obigen Ansprüche,
**dadurch gekennzeichnet,**
**dass** die optoelektronische Modulgruppe und das Anschlussmodul (17), gegebenenfalls auch das Lichtleitermodul (25), in das Basisgehäuse (21) eingeschnappt oder mit dem Basisgehäuse (21) verklebt oder verschweißt sind.

10. Gerät nach einem der obigen Ansprüche,
**dadurch gekennzeichnet,**
**dass** die Aufnahmen (22, 23) des Basisgehäuses (21) für die optoelektronische Modulgruppe und das Anschlussmodul (17) derart ausgebildet sind, dass die optoelektronische Modulgruppe in die Aufnahme (23) für das Anschlussmodul (17) und das Anschlussmodul (17) in die Aufnahme (22) für die optoelektronische Modulgruppe einführbar sind.

11. Gerät nach einem der obigen Ansprüche,
**dadurch gekennzeichnet,**
**dass** das Basisgehäuse (21) im wesentlichen quaderförmig ausgebildet ist.

12. Gerät nach einem der obigen Ansprüche,
**dadurch gekennzeichnet,**
**dass** das Basisgehäuse (21) die elektronischen und optoelektronischen Komponenten (12, 13) in hoher Schutzart kapselt.

13. Gerät nach Anspruch 12,
**dadurch gekennzeichnet,**
**dass** die Schutzart mindestens IP 54, besser IP 65 oder IP 67, entspricht.
